# EUROPÄISCHE PATENTSCHRIFT

(11) **EP 2 914 863 B1**
(45) Veröffentlichungstag und Bekanntmachung des Hinweises auf die Patenterteilung: **26.04.2017**
(21) Anmeldenummer: 13776748.9
(22) Anmeldetag: 01.10.2013
(51) Int. Cl.: F16B 43/00, F16B 5/06, F16B 5/12

(54) **VORRICHTUNG ZUM SICHERSTELLEN EINER ELEKTRISCHEN VERBINDUNG ZWISCHEN ZWEI MITEINANDER ZU VERBINDENDEN TEILEN**
DEVICE FOR ENSURING AN ELECTRIC CONNECTION BETWEEN TWO PARTS TO BE INTERCONNECTED
DISPOSITIF PERMETTANT D'ASSURER UNE CONNEXION ÉLECTRIQUE ENTRE DEUX PIÈCES À CONNECTER

(30) Priorität: 31.10.2012 DE 102012219963
(43) Veröffentlichungstag der Anmeldung: 09.09.2015
(73) Patentinhaber: A. Raymond et Cie, 38000 Grenoble (FR)
(72) Erfinder: HULLMANN, Klaus, 79540 Lörrach (DE); PHILIPP, Norman, 79540 Lörrach (DE); WEISSENFELD, Ramon, 79588 Efringen-Kirchen (DE)
(74) Vertreter: Grünecker Patent- und Rechtsanwälte PartG mbB
(86) Internationale Anmeldenummer: PCT/EP2013/070450
(87) Internationale Veröffentlichungsnummer: WO 2014/067738

(56) Entgegenhaltungen:
- WO-A1-86/07497
- DE-A1- 3 835 695
- DE-B1- 2 448 421

## Beschreibung

Die Erfindung betrifft eine Vorrichtung zum Sicherstellen einer elektrischen Verbindung zwischen zwei miteinander zu verbindenden Teilen gemäß dem Oberbegriff des Patentanspruches 1.

Eine derartige Vorrichtung ist aus WO 86/07497 A1 bekannt. Die vorbekannte Vorrichtung zum Sicherstellen einer elektrischen Verbindung zwischen zwei miteinander zu verbindenden Teilen verfügt über eine abschnittsweise plane Grundplatte, die über die Grundplatte erhabene Strukturen aufweist. Die erhabenen Strukturen verfügen jeweils über einen länglichen Tordierstreifen, der mit Endabschnitten mit der Grundplatte verbunden und in einem Mittenabschnitt gegenüber einem abschnittsweise planen Bereich der Grundplatte verdreht sowie beidseitig über die Grundplatte erhaben ist. Die Mittenabschnitte sind schräg zu der Grundplatte ausgerichtet und liegen bei bestimmungsgemäßer Verwendung mit einer gewissen Vorspannung an den miteinander zu verbindenden Teilen an, wobei bei der bestimmungsgemäßen Verwendung der vorbekannten Vorrichtung sicherzustellen ist, dass ein Flachdrücken der Tordierstreifen in die Ebene der Grundplatte vermieden ist.

Aus DE 24 48 421 B1 ist eine Vorrichtung zum Sicherstellen einer elektrischen Verbindung zwischen zwei miteinander zu verbindenden Teilen bekannt, die über gekrümmte dreiecksartige Zungen verfügen, der über die Ebene einer Grundplatte überstehende Spitzen unter einem spitzen Winkel zu der Grundplatte ausgerichtet sind. Dadurch ergibt sich ein Eingraben der Spitzen in miteinander zu verbindende Teile durch eine Horizontalbewegung der Spitzen gegenüber den Teilen.

Eine weitere Vorrichtung zum Sicherstellen einer elektrischen Verbindung zwischen zwei miteinander zu verbindenden Teilen ist aus US 2007/0248434 A1 bekannt. Die vorbekannte Vorrichtung zum Sicherstellen einer elektrischen Verbindung zwischen zwei miteinander zu verbindenden Teilen verfügt über eine wenigstens abschnittsweise plane Grundplatte, die über die Grundplatte erhabene Strukturen aufweist, welche als dornartige Erhebungen ausgebildet sind.

Der Erfindung liegt die Aufgabe zugrunde, eine Vorrichtung der eingangs genannten Art anzugeben, die sich durch ein sehr zuverlässiges Sicherstellen einer elektrischen Verbindung zwischen zwei miteinander zu verbindenden Teilen auszeichnet.

Diese Aufgabe wird bei einer Vorrichtung der eingangs genannten Art erfindungsgemäß mit den kennzeichnenden Merkmalen des Patentanspruches 1 gelöst.

Dadurch, dass erfindungsgemäß die erhabenen Strukturen über wenigstens einen länglichen Tordierstreifen verfügen, der mit Endabschnitten mit der Grundplatte verbunden und in einem Mittenbereich gegenüber einem abschnittsweise planen Bereich der Grundplatte verdreht sowie beidseitig über die Grundplatte erhaben ist und der oder jeder Mittenabschnitt rechtwinklig zu der Grundplatte ausgerichtet ist, ergibt sich eine sehr sichere elektrische Verbindung zwischen zwei miteinander zu verbindenden Teilen dadurch, dass sich der oder jeder Tordierstreifen bei Zusammenpressen der miteinander zu verbindenden Teile aufgrund seiner in einer Richtung rechtwinklig zu dem abschnittsweise planen Bereich der Grundplatte hohen Steifigkeit über eine gewisse Länge in das Material der miteinander zu verbindenden Teile eingräbt und dadurch die beiden Teile zuverlässig miteinander elektrisch kontaktiert.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung eines Ausführungsbeispieles mit Bezug auf die Figuren der Zeichnung.

Es zeigen:
- Fig. 1: in einer perspektivischen Ansicht ein Ausführungsbeispiel einer erfindungsgemäßen Vorrichtung,
- Fig. 2: in einer Seitenansicht das Ausführungsbeispiel gemäß Fig. 1,
- Fig. 3: in einer perspektivischen Ansicht das Ausführungsbeispiel gemäß Fig. 1 bei einem ersten Herstellungsschritt,
- Fig. 4: in einer Schnittansicht das Ausführungsbeispiel gemäß Fig. 1 bei dem ersten Herstellungsschritt und
- Fig. 5: in einer Schnittansicht das Ausführungsbeispiel gemäß Fig. 1 bei einem zweiten Herstellungsschritt.

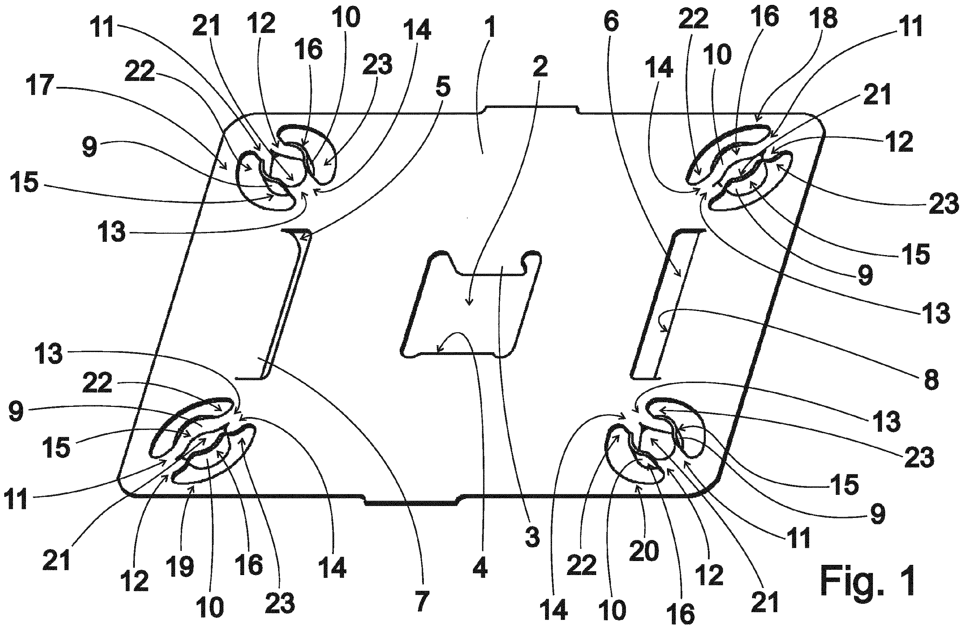

Fig. 1 zeigt in einer perspektivischen Ansicht ein als Stanz-BiegeTeil aus einem relativ dünnen Metallblech hergestelltes Ausführungsbeispiel einer erfindungsgemäßen Vorrichtung. Das Ausführungsbeispiel gemäß Fig. 1 verfügt über eine rechteckförmige plane Grundplatte 1, die in einem Mittenbereich mit einer zum Durchführen einer in Fig. 1 nicht dargestellten Verbindungsschranke zum Verbinden von zwei in Fig. 1 ebenfalls nicht dargestellten Teilen vorgesehenen Zentralausnehmung 2 ausgebildet ist, deren Umrandung an zwei einander gegenüber liegenden Seiten jeweils eine rechtwinklig zu der Grundplatte 1 in einer Richtung ausgestellte Mittenlasche 3, 4 aufweist. Weiterhin ist die Grundplatte 1 außenseitig der von Mittenlaschen 3, 4 freien Randseiten der Zentralausnehmung 2 mit Seitenausnehmungen 5, 6 versehen, die sich parallel zu den kurzen Randseiten der Grundplatte 1 erstrecken, wobei an den nach außen gewandten langen Randseiten der Seitenausnehmungen 5, 6 jeweils eine Seitenlasche 7, 8 ausgebildet ist, die rechtwinklig zu der Grundplatte 1 angestellt sind und sich auf die gleiche Seite wie die Mittenlaschen 3, 4 erstrecken.

Weiterhin lässt sich der Darstellung gemäß Fig. 1 entnehmen, dass das Ausführungsbeispiel in den Eckbereichen der Grundplatte 1 angeordnete erhabene Strukturen aufweist, die durch Paare von Tordierstreifen 9, 10 gebildet sind, welche mit in der Ebene der Grundplatte 1 liegenden sowie paarweise zusammenlaufenden Endabschnitten 11, 12, 13, 14 mit der Grundplatte 1 verbunden sind und mit zwischen den Endabschnitten 11, 12, 13, 14 liegenden Mittenabschnitten 15, 16, die gegenüber den Endabschnitten 11, 12, 13, 14 verdreht sind, rechtwinklig zu der Grundplatte 1 ausgerichtet sind. Die Mittenabschnitte 15, 16 stehen beidseitig über den sie jeweils umgebenden abschnittsweise planen Bereich der Grundplatte 1 über.

Die Tordierstreifen 9, 10 sind bei dem Ausführungsbeispiel gemäß Fig. 1 in Eckausnehmungen 17, 18, 19, 20 als Ausnehmungen angeordnet, die jeweils aus einer zwischen den Mittenabschnitten 15, 16 liegenden Mittenausnehmung 21 und zwei außenseitig der Mittenausnehmung 21 liegenden Randausnehmungen 22, 23 gebildet ist. Dabei stellen die relativ langen Außenkanten der Mittenabschnitte 15, 16 einen zuverlässigen elektrischen Kontakt zwischen den Teilen her, wobei sie durch die Endabschnitte 11, 12, 13, 14 zuverlässig mit der Grundplatte 1 verbunden bleiben.

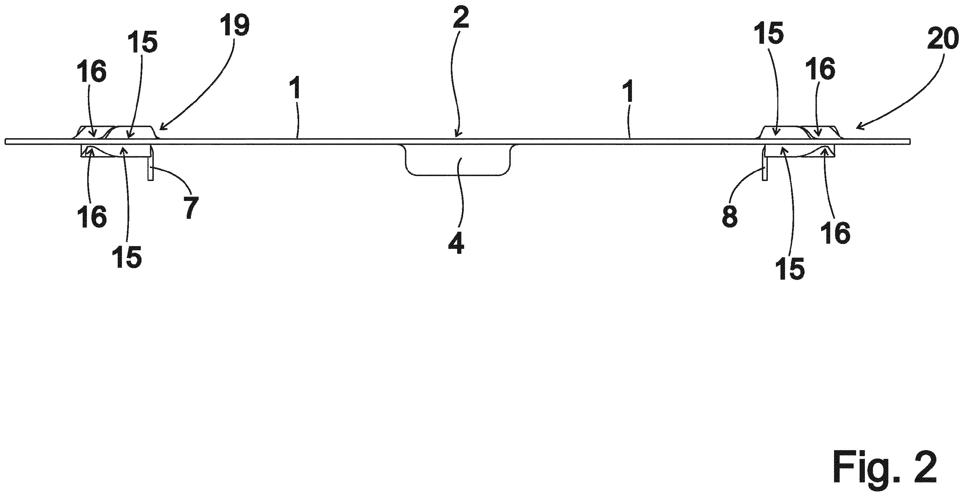

Fig. 2 zeigt in einer Seitenansicht das Ausführungsbeispiel gemäß Fig. 1. Aus Fig. 2 ist deutlich ersichtlich, dass die Mittenabschnitte 15, 16 der Tordierstreifen 9, 10 mit einer einem Vielfachen der Dicke der Grundplatte 1 entsprechenden Abmessung beidseitig über die Flachseiten der Grundplatte 1 überstehen.

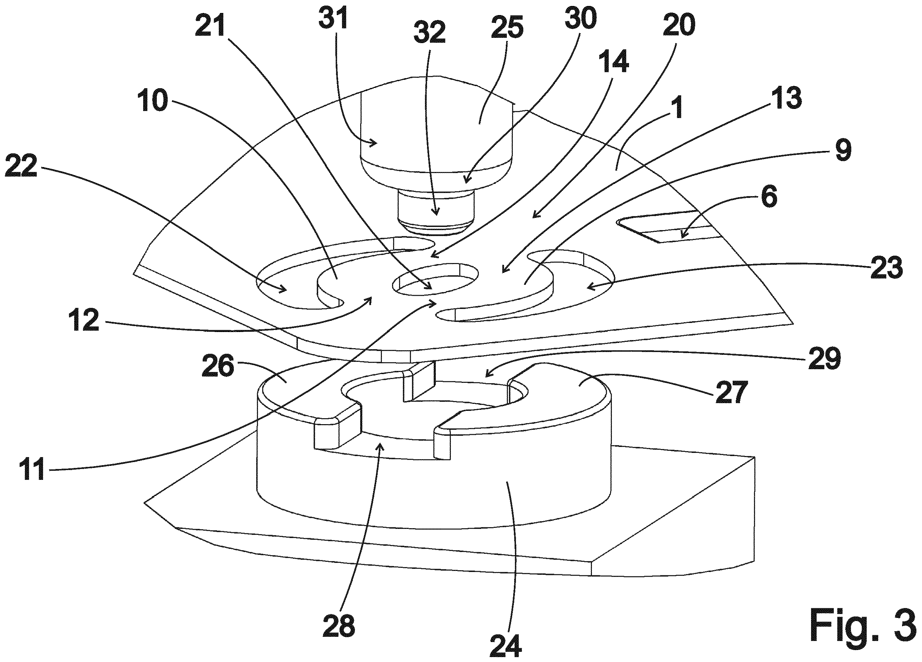

Fig. 3 zeigt in einer perspektivischen Ansicht das Ausführungsbeispiel gemäß Fig. 1 im Bereich einer Eckausnehmung 20 bei einem ersten Herstellungsschritt sowie eine Matrize 24 mit zugehöriger Patrize 25.

Die Matrize 24 weist eine hohlzylinderartige Gestalt mit zwei erhabenen Stirnabschnitten 26, 27 und mit zwischen den Stirnabschnitten 26, 27 liegenden Nuten 28, 29 auf. Die stirnseitigen Dimensionen der Matrize 24 sind dabei so eingerichtet, dass die Außenseiten der Stirnabschnitte 26, 27 entlang der Außenseiten der Randausnehmungen 22, 23 der Eckausnehmung 20 verlaufen, während die inneren Randseiten der Stirnabschnitte 26, 27 radial innenseitig der nach radial außen weisenden Randseiten der Mittenabschnitte 15, 16 liegen.

Die Patrize 25 weist einen Dorn 30 auf, der über einen Fußabschnitt 31 mit verhältnismäßig großem Durchmesser und über einen Kopfabschnitt 32 mit einem gegenüber dem Durchmesser des Fußabschnittes 31 geringeren Durchmesser verfügt.

Bei dem ersten Herstellungsschritt gemäß Fig. 3 liegen die Mittenabschnitte 15, 16 der Tordierstreifen 9, 10 nach Ausführen eines auf einen Rohling der Grundplatte 1 einwirkenden Stanzprozesses noch in der Ebene der Grundplatte 1.

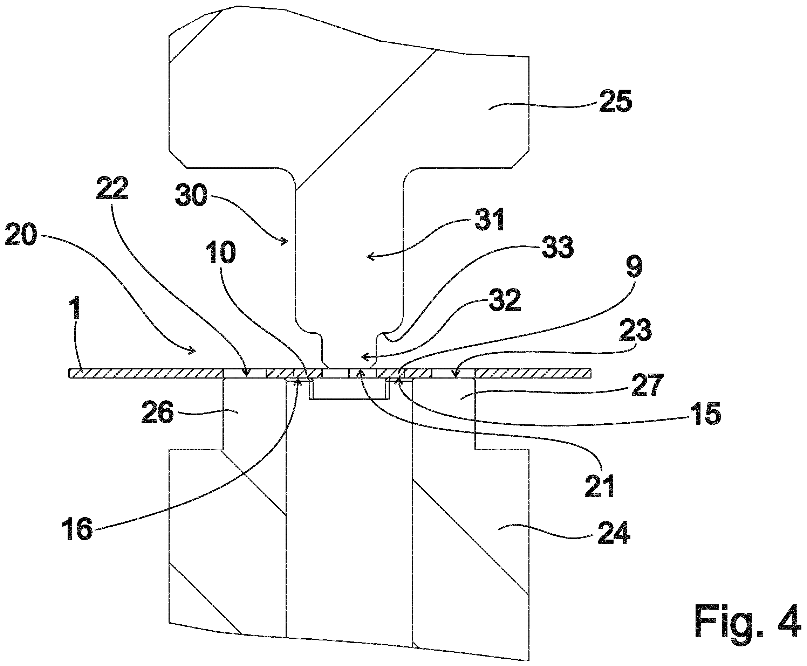

Fig. 4 zeigt in einer Schnittansicht das Ausführungsbeispiel gemäß Fig. 1 bei dem ersten Herstellungsschritt gemäß Fig. 3 mit gegenüber der Anordnung gemäß Fig. 3 aneinander angenäherter Matrize 24 und Patrize 25. Wie aus der Darstellung gemäß Fig. 4 ersichtlich ist, entspricht der Außendurchmesser des Kopfabschnittes 32 dem Innendurchmesser der Mittenausnehmung 21 der Eckausnehmung 20 in der noch planen Anordnung der Mittenabschnitte 15, 16 gemäß Fig. 3, während der Außendurchmesser des Fußabschnittes 31 gegenüber dem Durchmesser des Kopfabschnittes 32 um die Breite eines Tordierstreifens 9, 10 größer ist, so dass zwischen dem Kopfabschnitt 32 und dem Fußabschnitt 31 eine zweckmäßigerweise mit randseitig abgerundeten Übergängen zu dem Fußabschnitt 31 und dem Kopfabschnitt 32 versehene Tordierstufe 33 mit einer Dimension in radialer Richtung ausgebildet ist, die der Hälfte der Breite eines Mittenabschnittes 15, 16 eines Tordierstreifens 9, 10 entspricht.

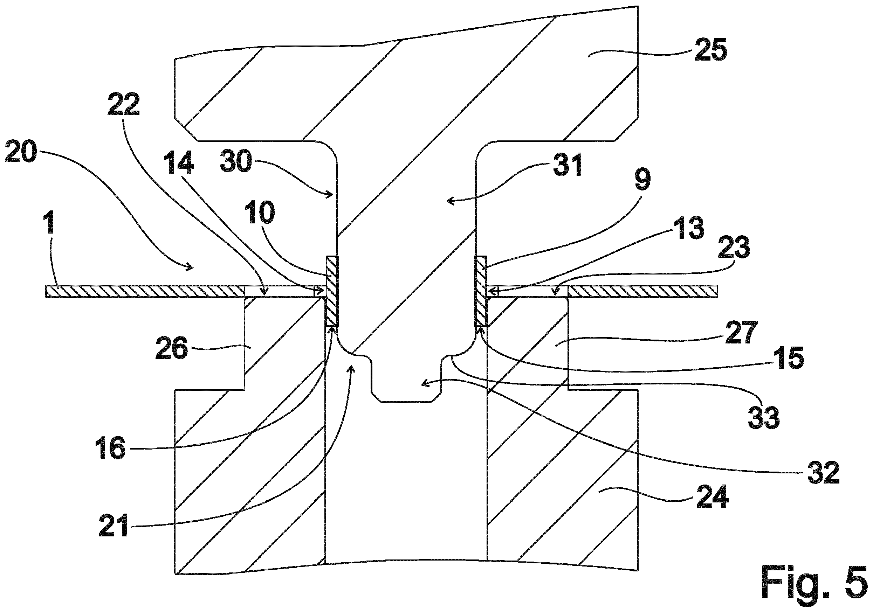

Fig. 5 zeigt in einer Schnittansicht gemäß Fig. 4 das Ausführungsbeispiel gemäß Fig. 1 bei einem zweiten Herstellungsschritt, der ausgehend von dem ersten Herstellungsschritt gemäß Fig. 4 dadurch eingenommen wird, dass durch Annähern von Matrize 24 und Patrize 25 der Fußabschnitt 31 des Dornes 30 in die Mittenausnehmung 21 der Eckausnehmung 20 eingetaucht ist und die bei dem ersten Herstellungsschritt gemäß Fig. 3 und Fig. 4 noch planen sowie in der Ebene der Grundplatte 1 liegenden Mittenabschnitte 15, 16 verdreht und rechtwinklig zu der Grundplatte 1 mit beidseitigem Überstand über diese ausgerichtet sind.

Nach Ausfahren der Patrize 25 aus der Matrize 24 lässt sich die erfindungsgemäße Vorrichtung entnehmen und bestimmungsgemäß verwenden.

## Patentansprüche

1. Vorrichtung zum Sicherstellen einer elektrischen Verbindung zwischen zwei miteinander zu verbindenden Teilen mit einer wenigstens abschnittsweise planen Grundplatte (1), die über die Grundplatte (1) erhabene Strukturen aufweist, wobei die erhabenen Strukturen über wenigstens einen länglichen Tordierstreifen (9; 10) verfügen, der mit Endabschnitten (11, 12; 13, 14) mit der Grundplatte (1) verbunden und in einem Mittenabschnitt (15, 16) gegenüber einem abschnittsweise planen Bereich der Grundplatte (1) verdreht sowie beidseitig über die Grundplatte (1) erhaben ist, **dadurch gekennzeichnet, dass** der oder jeder Mittenabschnitt (15, 16) rechtwinklig zu der Grundplatte (1) ausgerichtet ist.

2. Vorrichtung nach Anspruch 1, **dadurch gekennzeichnet, dass** eine Anzahl von Tordierstreifen (9, 10) vorhanden sind, die paarweise einander gegenüber liegen.

3. Vorrichtung nach Anspruch 2, **dadurch gekennzeichnet, dass** bei dem oder jedem Paar von einander gegenüberliegenden Tordierstreifen (9, 10) der jeweilige Mittenabschnitt (15, 16) über in der Ebene der Grundplatte (1) liegende plane Endabschnitte (11, 12; 13, 14) mit der Grundplatte (1) verbunden ist.

4. Vorrichtung nach Anspruch 3, **dadurch gekennzeichnet, dass** das oder wenigstens ein einander gegenüberliegendes Paar von Tordierstreifen (9, 10) in einer durch eine Mittenausnehmung (21) und durch Randausnehmungen (22, 23) gebildeten Ausnehmung (17, 18, 19, 20) angeordnet sind.

5. Vorrichtung nach einem der Ansprüche 1 bis 4, **dadurch gekennzeichnet, dass** der oder eine Anzahl von Tordierstreifen (9, 10) randseitig angeordnet sind.

## Claims

1. Device for ensuring an electrical connection between two parts to be interconnected, comprising a base plate (1) which is flat at least in sections and which has structures protruding from the base plate (1), wherein the protruding structures have at least one elongate twisting strip (9; 10) which with end sections (11, 12; 13, 14) is connected to the base plate (1) and is skewed in a center section (15, 16) with respect to a region of the base plate (1), which is flat in sections, and protrudes on both sides from the base plate (1), **characterized in that** the or each center section (15, 16) is oriented at a right angle relative to the base plate (1).

2. Device according to claim 1, **characterized in that** a number of twisting strips (9, 10) are present opposing each other in pairs.

3. Device according to claim 2, **characterized in that** in the or in each pair of opposing twisting strips (9, 10) the respective center section (15, 16) is connected to the base plate (1) via flat end sections (11, 12; 13, 14) lying in the plane of the base plate (1).

4. Device according to claim 3, **characterized in that** the or at least one opposing pair of twisting strips (9, 10) is arranged in a recess (17, 18, 19, 20) formed by a center recess (21) and by edge recesses (22, 23).

5. Device according to any one of claims 1 to 4, **characterized in that** the twisting strip or a number of twisting strips (9, 10) are arranged at the edge side.

## Revendications

1. Dispositif pour assurer une connexion électrique entre deux pièces à relier l'une à l'autre, comprenant une plaque de base (1) au moins partiellement plane, qui présente des structures en relief par rapport à la plaque de base (1), les structures en relief disposant d'au moins une languette de torsion (9; 10) allongée, qui est reliée à la plaque de base (1) par des tronçons d'extrémité (11, 12; 13, 14), et qui, au niveau d'un tronçon central (15, 16), a subi une torsion par rapport à une zone partiellement plane de la plaque de base (1), et est en relief des deux côtés de la plaque de base (1), **caractérisé en ce que** le ou chaque tronçon central (15, 16) est orienté à angle droit par rapport à la plaque de base (1).

2. Dispositif selon la revendication 1, **caractérisé en ce qu'**il est prévu un certain nombre de languettes de torsion (9, 10), qui sont mutuellement opposées par paire.

3. Dispositif selon la revendication 2, **caractérisé en ce que** pour la ou chaque paire de languettes de torsion (9, 10) mutuellement opposées, le tronçon central (15, 16) respectif est relié à la plaque de base (1) par l'intermédiaire de tronçons d'extrémité (11, 12; 13, 14) de configuration plane, se situant dans le plan de la plaque de base (1).

4. Dispositif selon la revendication 3, **caractérisé en ce que** la ou au moins une paire de languettes de torsion (9, 10) mutuellement opposées sont agencées dans un évidement (17, 18, 19, 20) formé par un évidement central (21) et des évidements de bordure (22, 23).

5. Dispositif selon l'une des revendications 1 à 4, **caractérisé en ce que** la ou un certain nombre de languettes de torsion (9, 10) sont agencées en bordure.
